# EUROPEAN PATENT SPECIFICATION

(11) **EP 2 447 313 B1**
(45) Date of publication and mention of the grant of the patent: **16.01.2013**
(21) Application number: 11180709.5
(22) Date of filing: 09.09.2011
(51) Int. Cl.: C08K 3/08, H01B 1/22, B82Y 30/00, C09D 5/24, H01B 1/02

(54) **Method of silvering surfaces, especially aluminium surfaces**
Verfahren zur Versilberung von Oberflächen, insbesondere von Aluminiumoberflächen
Procédé d'argenture des surfaces, spécialement les surfaces en aluminium

(30) Priority: 16.09.2010 PL 39241910; 28.12.2010 PL 39345610
(43) Date of publication of application: 02.05.2012
(73) Proprietor: Instytut Technologii Materialów Elektronicznych, 01-919 Warszawa (PL)
(72) Inventor: Jakubowska, Malgorzata, 02-541 Warszawa (PL); Teodorczyk, Marian, 01-926 Warszawa (PL); Mlozniak, Anna, 01-737 Warszawa (PL); Jeremiasz, Olgierd, 44-300 Wodzislaw Slaski (PL); Jarosz, Mateusz, 20-538 Lublin (PL)
(74) Representative: Sielewiesiuk, Jakub

(56) References cited:
- US-A1- 2005 215 689
- US-A1- 2009 314 469
- DATABASE WPI Week 200926 Thomson Scientific, London, GB; AN 2009-F03828 XP002671148, & KR 2008 0114202 A (DONGWOO FINE CHEM CO LTD) 31 December 2008 (2008-12-31)

## Description

### Technical Field

The subject of the invention is a method of silvering surfaces, especially aluminium surfaces. More particularly, the invention relates to a method of silvering surfaces sensitive to high temperatures, as for example aluminium surfaces, foils, paper, fabric, etc. The invention can be applied for example in electrical power engineering and high power industry as well as in printed and flexible electronics.

### Background

Different methods of aluminium silvering, as well as different methods of silvering elements other than aluminium are known in the art.

Common electrochemical (galvanic) methods are being applied for a long time. They consist in immersing the object subjected to silvering in bath containing proper salts (in case of silvering - especially silver salts) and application of current to the bath, which causes ions of silver to migrate and deposit on the object being silvered. These methods have been the subject of many patent applications for dozens of years. For example, the following publications can be mentioned: EP1207220A1, US4430169A or GB923579A. Schloetter company from Austria is a known supplier of galvanic methods on the market as regards aluminium silvering, and it owns many patent applications within this domain (e.g. DE10342291A1, GB443428A).

Application US4115212A discloses a method of galvanic silvering of aluminium without using intermediate layers. In turn, application US3915667A discloses a method that uses a lot of intermediate layers.

Galvanic methods are generally expensive and time-consuming. They require the use of chemical compounds, which frequently are toxic, harmful to health and natural environment. As indicated above - in case of such methods, it is often necessary to use intermediate layers (e.g. of copper or nickel) in order to prevent fast passivation of aluminium (i.e. covering by non-conductive layer of oxide). This additionally increases costs and extends the process. Moreover, galvanic methods cannot be used for coating non-conductive surfaces (e.g. fabric, plastics). Another disadvantage of galvanic methods is their low selectivity.

Known methods of silvering include also spraying or sputtering of silver onto the surface. Silver sputtering process is described for example in the application US2009314469A1.

The oldest and the simplest methods of silvering are mechanical methods that consist in painting the surface with a solution containing silver ions (e.g. application GB491175A - painting with silver nitrate solution) or applying by rubbing a paste containing such ions (e.g. application GB378874A - paste containing silver chloride).

There is also a method of silvering known that consist in coating the surface being silvered, by means of screen printing, with paste containing silver powder and glaze that supports sintering process (M. Jakubowska et al., Investigation On a New Silver Photoimageable Conductor, Microelectronics Reliability, 2008; Vol. 48, Issue 6: 860-5). Then, the applied paste is sintered at the temperature of about 600°C - 850°C, i.e. slightly below the melting point of silver (approximately 962°C), in order to obtain a continuous layer of silver. However, the presence of glaze in the layer after the sintering causes that paths thus obtained may only operate up to temperature of approximately 200°C, above which obtained layer becomes unstable due to glaze flow. Moreover, these methods are not suitable for silvering aluminium, whose melting temperature is about 660°C, neither for silvering surfaces more sensitive to temperature, such as for example plastics or fabric.

From the US patent application no. US 2005/0136638 A1, a composition containing a mixture of nano-particles of silver and nano-particles of gold is known, that forms a suspension in a carrier, the liquid carrier being preferred. The mixture is applied onto the surface subjected to silvering (support) and then is sintered in order to obtain a continuous conductive layer of silver. What is very important, is the fact, that sintering stage is performed at temperatures below 250°C and even about 200°C, so the method disclosed in this application can be applied for silvering the surfaces sensitive to temperature.

According to the disclosure of US 2005/0136638, the composition must necessarily contain nano-particles of gold, whose presence enables lowering the sintering temperature. Authors of the solution described in this application clearly prefer the liquid carrier that enables very precise application of the composition onto the support, for example using ink printer. Thanks to this, it is possible to obtain precise paths used for example in electronics. However, this method is not suitable for fast coating of a large surface, what is required e.g. in electrical power engineering.

A problem indicated in the application US 2005/0136638 is the undesired agglomeration of nano-particles in the carrier. In order to prevent it, nano-particles of silver and gold must be subjected to special treatments, e.g. flushing in alcohol, thiols, surfactants, etc.

The object of the present invention is thus to provide a method of silvering aluminium surfaces that is free of the above mentioned disadvantages. In particular, the purpose of the invention is to provide a method of silvering aluminium surfaces, wherein the sintering stage is performed at temperatures significantly below the aluminium melting temperature, preferably within the range of about 200°C - 400°C, so that the aluminium surface being silvered remains undamaged after the sintering stage.

In the Polish patent application no. P-392419, that has not yet been published, a paste containing nano-particles of silver is described. According to the description of application no. P-392419, said paste consists of 80-85% by weight of nano-powder of silver and 15-20% by weight of organic carrier based on methyl polymethacrylate, wherein the nano-powder of silver preferably contains 0-30% by weight of nano-particles of silver carbonate and/or 0-20% by weight of nano-particles of silver oxide. Moreover, according to the description of P-392419, the nano-powder of silver is preferably of grain size 10-100nm and contains a mixture of nano-particles of silver carbonate and nano-particles of silver oxide in weight ratio 3:2. Said organic carrier based on methyl polymethacrylate is preferably a solution of concentration of 6-16% by weight of methyl polymethacrylate in butyl carbitol acetate.

The authors of the present invention found that this paste is perfectly suitable for silvering aluminium surfaces and that after applying said paste onto the surface being silvered - in order to obtain continuous coating, it is sufficient to sinter at the temperatures of 200°C - 400°C, so the silvered aluminium surface remains undamaged after the sintering stage. This effect - contrary to the suggestions included in said application no. US 2005/0136638 A1 - is surprisingly achieved without adding nano-particles of gold to the paste. This can be obtained due to high surface energy of the silver nano-particles.

### Summary

According to invention, the method of silvering surfaces is characterized in that it includes a stage of applying onto said surface a paste consisting of 80-85% by weight of nano-particles of silver and 15-20% by weight of organic carrier based on methyl polymethacrylate.

In a preferred embodiment, said surface is an aluminium surface.

In another preferred embodiment, said surface is a surface selected from the group comprising plastics, paper and fabric.

Preferably, said stage of applying said paste is performed using the screen printing method and more preferably in a screen printer. In such case, according to invention, e.g. steel or polyester net can be used.

In a preferred embodiment, the inventive method additionally comprises a stage of air drying of said paste applied onto said surface.

Preferably, said stage of air drying takes from 5 to 20 minutes, more preferably from 5 to 10 minutes.

In another preferred embodiment, the inventive method additionally comprises a stage of drying of said paste applied onto said surface using a band drier.

Preferably, said stage of drying using a band drier takes from 5 to 10 minutes.

Preferably, said stage of drying using a band drier is performed at the temperature from 100°C to 150°C, more preferably at about 120°C.

In a still more preferred embodiment, the inventive method additionally comprises a stage of sintering said paste applied on said surface at the temperature from 200°C to 400°C, more preferably from 250°C to 350°C and most preferably from 300°C to 350°C.

Preferably, said stage of sintering is performed in a chamber furnace, wherein the heating up time is from 20 to 40 minutes, more preferably from 30 to 40 minutes, and the hold-up time is from 50 to 120 minutes, more preferably from 60 to 90 minutes.

In a preferred embodiment of the invention, said paste comprises a nano-powder of silver, containing 0-30% by weight of nano-particles of silver carbonate and/or 0-20% by weight of nano-particles of silver oxide.

Preferably, the nano-powder of silver comprises a mixture of a nano-powder of silver carbonate and said nano-powder of silver oxide in the weight ratio of 3:2.

Preferably, said paste comprises a nano-powder of silver having the grain size of 10nm-100nm.

Preferably, said paste comprises an organic carrier based on methyl polymethacrylate, which is a solution of concentration 6-16% by weight of methyl polymethacrylate in butyl carbitol acetate.

The method of silvering according to the present invention has many advantages. First, due to low temperature of sintering (200°C - 400°C), it can be applied to silvering surfaces sensitive to temperature, such as aluminium, plastics (foils), fabrics. Second, because the paste used does not contain glaze - after sintering paths/layers are obtained that can operate at high temperatures and that provide good heat dissipation. In particular, layers obtained using the method according to invention, withstand continuous operation at the temperature of 450°C at current load of 2.5A. Silvering using the present inventive method does not require any intermediate layers to be used, and the paste composition is simplified (e.g. comparing to the publication US 2005/0136638). Thus, it is a relatively fast and inexpensive method. Using the screen printing as the method of applying the paste results on the one hand in the possibility of fast coating of large surfaces (e.g. silvering of aluminium for the needs of electrical power engineering), and on the other hand - in a high selectivity of silvering (it is possible to print actually any complex arrangement of paths). Screen printing - as an inexpensive and commonly available method - may be applied without excessive outlays even by small and medium-size companies. Finally - because the applied pastes do not comprise lead or other harmful substances - they meet stringent requirements of ecological standards. In this way, the inventive method is less burdensome to the surroundings, natural environment and health of employees.

### Brief Description of the Drawings

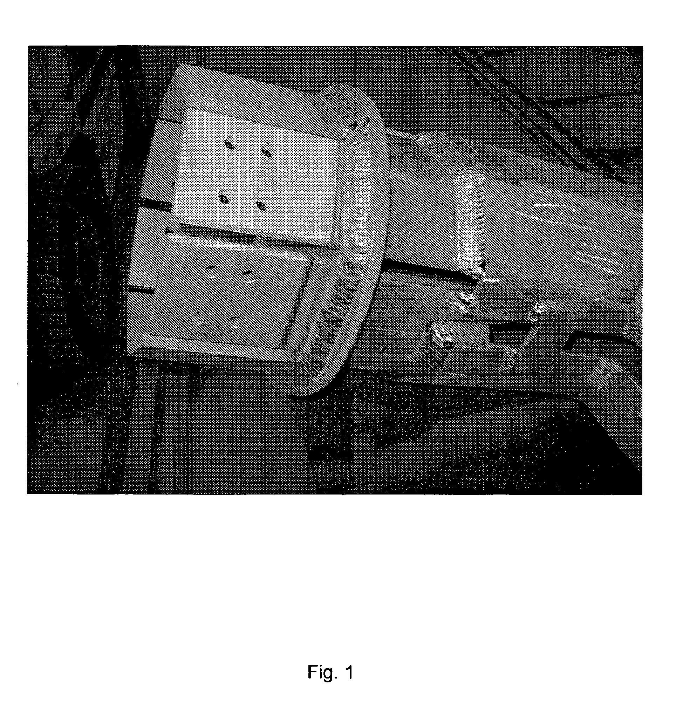

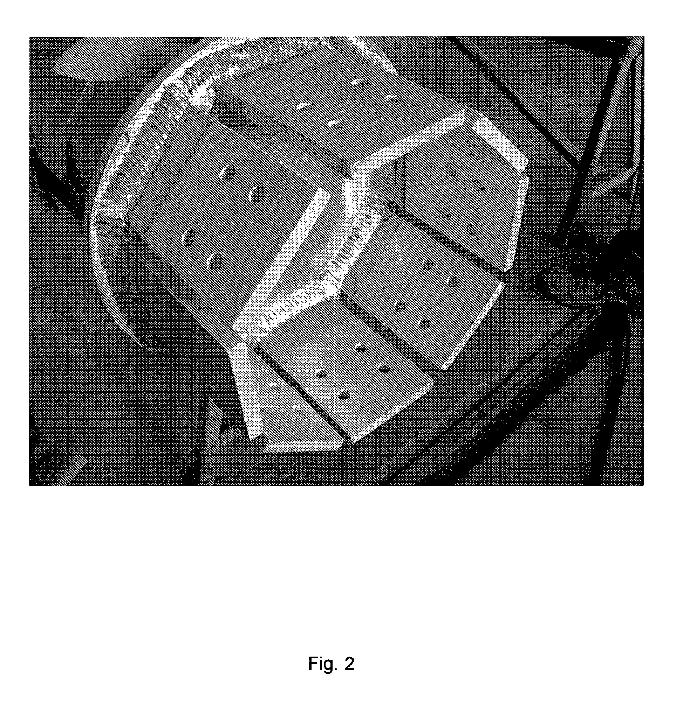

The invention will now be presented in details in preferred embodiments, with reference to the accompanying drawing, in which fig. 1 and fig. 2 show photographs of aluminium contact surfaces, silvered using the inventive method, according to example 1.

### Preferred embodiments of invention

### Example 1

The paste was prepared in the following manner: 100g of nano-powder of silver having the grain size of 100nm, containing an admixture of 15% by weight of nano-powder of silver carbonate and 10% by weight of nano-powder of silver oxide, was energetically ground in a mortar. Then, while still grinding, a carrier was added, in the form of 8% (by weight) solution of methyl polymethacrylate in butyl carbitol acetate, in the amount of 20g. Next, the mixture was rolled three times on steel rolls of the three roll mill.

The paste prepared in this way was applied using the screen printing method onto a flat surface of an aluminium substrate (i.e. contacts, made of aluminium sheet of thickness of about 3cm). The screen printer used polyester nets 68-130 T and emulsion masking the sieve, having the thickness of 30µm. Alternatively, e.g. metal nets of mesh 180-325 can be used. Thickness of emulsion can be from 15µm to 100µm.

After printing, the paste layer was air dried for 10 minutes. This is so called levelling, performed in order to level the surface.

Then the stage of drying was performed using band drier at the temperature of 120°C for 10 minutes.

Finally, the printed layer was sintered in a chamber furnace, at the temperature of between 300°C and 400°C, in a cycle of 1.5h (heating up/ramping time - 0.5h, hold-up time 1 h).

As a result of the above mentioned process, continuous, sintered and electric current conducting layer was obtained, having the thickness from 1µm to 3µm. Sheet resistivity (R/□) of the obtained layer was between 4mΩ/□ and 10mΩ/□.

Photographs of contacts silvered according to example 1 are presented in fig. 1 and fig. 2.

### Example 2

Procedure was analogical to the procedure described in example 1, with the only difference in that the stage of sintering in the chamber furnace was performed at the temperature of 200°C, in a cycle of 2 h (heating up/ramping time - 20 minutes, hold-up time - 1 h 40 minutes).

As a result of the above mentioned process, continuous, sintered and electric current conducting layer was obtained, having the thickness from 1µm to 3µm. Sheet resistivity (R/□) of the obtained layer was between 4mΩ/□ and 10mΩ/□.

## Claims

1. A method of silvering surfaces, **characterized in that** it includes a stage of applying onto said surface a paste consisting of 80-85% by weight of nano-particles of silver and 15-20% by weight of organic carrier based on methyl polymethacrylate.

2. The method according to claim 1, **characterized in that** said surface is an aluminum surface.

3. The method according to claim 1, **characterized in that** said surface is a surface selected from the group comprising plastics, paper and fabric.

4. The method according to any one of the preceding claims, **characterized in that** said stage of applying said paste is performed using the screen printing method, preferably in a screen printer.

5. The method according to claim 4, **characterized in that** for said screen printing, a steel or polyester net is used.

6. The method according to any one of the preceding claims, **characterized in that** it additionally comprises a stage of air drying of said paste applied onto said surface, preferably lasting from 5 to 20 minutes, more preferably lasting from 5 to 10 minutes.

7. The method according to any one of the preceding claims, **characterized in that** it additionally comprises a stage of drying of said paste applied onto said surface using a band drier, preferably lasting from 5 to 10 minutes.

8. The method according to claim 7, **characterized in that** said stage of drying using a band drier is performed at the temperature from 100°C to 150°C, more preferably at about 120°C.

9. The method according to any one of the preceding claims, **characterized in that** it additionally comprises a stage of sintering said paste applied on said surface at the temperature from 200°C to 400°C, more preferably from 250°C to 350°C and most preferably from 300°C to 350°C.

10. The method according to claim 9, **characterized in that** said stage of sintering is performed in a chamber furnace.

11. The method according to claim 9 or 10, **characterized in that** in said stage of sintering, the heating up time is from 20 to 40 minutes, preferably from 30 to 40 minutes, and the hold-up time is from 50 to 120 minutes, preferably from 60 to 90 minutes.

12. The method according to any one of the preceding claims, **characterized in that** said paste comprises a nano-powder of silver, containing 0-30% by weight of nano-particles of silver carbonate and/or 0-20% by weight of nano-particles of silver oxide.

13. The method according to claim 12, **characterized in that** said nano-powder of silver comprises a mixture of a nano-powder of silver carbonate and a nano-powder of silver oxide in the weight ratio of 3:2.

14. The method according to any one of the preceding claims, **characterized in that** said paste comprises a nano-powder of silver having the grain size of 10nm-100nm.

15. The method according to any one of the preceding claims, **characterized in that** said paste comprises an organic carrier based on methyl polymethacrylate, which is a solution of concentration 6-16% by weight of methyl polymethacrylate in butyl carbitol acetate.

## Patentansprüche

1. Flächenversilberungsverfahren **dadurch gekennzeichnet, dass** es den Schritt des Auftragens einer Paste bestehend aus 80-85 Gew.-% Silber-Nanopulver und 15-20 Gew.-% organischem Träger auf Basis von Polymethylmetacrylat auf die vorgenannte Fläche umfasst.

2. Verfahren nach Anspruch 1, **dadurch gekennzeichnet, dass** die vorgenannte Fläche Aluminium ist.

3. Verfahren nach Anspruch 1, **dadurch gekennzeichnet, dass** die vorgenannte Fläche eine Fläche ist, gewählt aus der Gruppe umfassend Kunststoffe, Papier und Gewebe.

4. Verfahren nach einem der vorstehenden Ansprüche, **dadurch gekennzeichnet, dass** der erwähnte Verfahrensschritt zur Auftragung der Paste mit Einsatz der Siebdruckmethode, vorteilhafterweise in einem Siebdrucker durchgeführt wird.

5. Verfahren nach Anspruch 4, **dadurch gekennzeichnet, dass** zum Siebdruck ein Stahl-, oder Polyestersieb eingesetzt wird.

6. Verfahren nach einem der vorstehenden Ansprüche, **dadurch gekennzeichnet, dass** es zusätzlich einen Verfahrensschritt zur Freilufttrocknung der auf die vorgenannte Fläche aufgetragenen Paste, vorteilhaft mit einer Dauer von 5 bis 20 Minuten, und vorteilhafter mit einer Dauer von 5 bis 10 Minuten umfasst.

7. Verfahren nach einem der vorstehenden Ansprüche, **dadurch gekennzeichnet, dass** es zusätzlich einen Verfahrensschritt zur Trocknung der auf die vorgenannte Fläche aufgetragenen Paste mit dem Einsatz eines Bandtrockners und einer vorteilhaften Dauer von 5 bis 10 Minuten umfasst.

8. Verfahren nach Anspruch 7, **dadurch gekennzeichnet, dass** der erwähnte Verfahrensschritt zur Trocknung mit dem Einsatz eines Bandtrockners in einer Temperatur von 100°C bis 150°C, und vorteilhaft von ungefähr 120°C durchgeführt wird.

9. Verfahren nach einem der vorstehenden Ansprüche, **dadurch gekennzeichnet, dass** es zusätzlich den Verfahrensschritt zur Sinterung der auf die vorgenannte Fläche aufgetragenen Paste in einer Temperatur von 200°C bis 400°C, und vorteilhafter von 250°C bis 350°C, und besonders vorteilhaft von 300°C bis 350°C umfasst.

10. Verfahren nach Anspruch 9, **dadurch gekennzeichnet, dass** der vorgenannte Verfahrensschritt in einem Kammerofen durchgeführt wird.

11. Verfahren nach Anspruch 9 oder 10, **dadurch gekennzeichnet, dass** im vorgenannten Verfahrensschritt zur Sinterung die Aufbauzeit von 20 bis 40 Minuten, und vorteilhafter von 30 bis 40 Minuten, und die Verweilzeit von 50 bis 120 Minuten, und vorteilhafter von 60 bis 90 Minuten beträgt.

12. Verfahren nach einem der vorstehenden Ansprüche, **dadurch gekennzeichnet, dass** zur Zusammensetzung der vorgenannten Paste ein Silber-Nanopulver gehört, das 0-30 Gew.-% Silbercarbonat-Nanopartikel und/oder 0-20 Gew.-% Silberoxid-Nanopartikel enthält.

13. Verfahren nach Anspruch 12, **dadurch gekennzeichnet, dass** das Silbernanopulver eine Mischung von Silbercarbonat-Nanopartikeln und Silberoxid-Nanopartikeln in einem Gewichtsverhältnis von 3:2 enthält.

14. Verfahren nach einem der vorstehenden Ansprüche, **dadurch gekennzeichnet, dass** die vorgenannte Paste ein Silber-Nanopulver mit einer Korngröße von 10nm - 100nm enthält.

15. Verfahren nach einem der vorstehenden Ansprüche, **dadurch gekennzeichnet, dass** die vorgenannte Paste einen organischen Träger auf Basis von Polymethylmetacrylat enthält, dass eine Lösung mit einer Konzentration von 6-16 Gew.-% Polymethylmetacrylat in Butylcarbitolacetat darstellt.

## Revendications

1. Procédé d'argenture des surfaces, **caractérisé en ce qu'**il comprend une étape d'application sur ladite surface d'une pâte constituée de 80-85% en poids de nano-particules d'argent et 15-20% en poids de porteur organique à base de polyméthacrylate de méthyle.

2. Procédé selon la revendication 1, **caractérisé en ce que** ladite surface est une surface en aluminium.

3. Procédé selon la revendication 1, **caractérisé en ce que** ladite surface est une surface choisie dans le groupe comprenant les matières plastiques, le papier et le tissu.

4. Procédé selon l'une quelconque des revendications précédentes, **caractérisé en ce que** ladite étape d'application de ladite pâte est effectuée en utilisant le procédé de sérigraphie, de préférence dans une machine de sérigraphie.

5. Procédé selon la revendication 4, **caractérisé en ce que**, pour ladite sérigraphie, un filet en acier ou en polyester est utilisé.

6. Procédé selon l'une quelconque des revendications précédentes, **caractérisé en ce qu'**il comprend en outre une étape de séchage à l'air de ladite pâte appliquée sur ladite surface, de préférence d'une durée de 5 à 20 minutes, plus préférablement d'une durée de 5 à 10 minutes.

7. Procédé selon l'une quelconque des revendications précédentes, **caractérisé en ce qu'**il comprend en outre une étape de séchage de ladite pâte appliquée sur ladite surface à l'aide d'un séchoir à bande, préférablement d'une durée de 5 à 10 minutes.

8. Procédé selon la revendication 7, **caractérisé en ce que** ladite étape de séchage à l'aide d'un séchoir à bande est effectuée à une température de 100°C à 150°C, plus préférablement d'environ 120°C.

9. Procédé selon l'une quelconque des revendications précédentes, **caractérisé en ce qu'**il comprend en outre une étape de frittage de ladite pâte appliquée sur ladite surface à une température de 200°C à 400°C, plus préférablement de 250°C à 350°C et encore plus préférentiellement de 300°C à 350°C.

10. Procédé selon la revendication 9, **caractérisé en ce que** ladite étape de frittage est effectuée dans un four à chambre.

11. Procédé selon la revendication 9 ou 10, **caractérisé en ce que**, dans ladite étape de frittage, le temps de réchauffement est de 20 à 40 minutes, de préférence de 30 à 40 minutes, et le temps de retenue est de 50 à 120 minutes, de préférence de 60 à 90 minutes.

12. Procédé selon l'une quelconque des revendications précédentes, **caractérisé en ce que** ladite pâte comprend une nano-poudre d'argent, contenant 0-30% en poids de nano-particules de carbonate d'argent et/ou 0-20% en poids de nano-particules d'oxyde d'argent.

13. Procédé selon la revendication 9, **caractérisé en ce que** ladite nano-poudre d'argent comprend un mélange d'une nano-poudre de carbonate d'argent et d'une nano-poudre d'oxyde d'argent dans une proportion pondérale de 3:2.

14. Procédé selon l'une quelconque des revendications précédentes, **caractérisé en ce que** ladite pâte comprend une nano-poudre d'argent présentant la taille de grain de 10 nm à 100 nm.

15. Procédé selon l'une quelconque des revendications précédentes, **caractérisé en ce que** ladite pâte comprend un porteur organique à base de polyméthacrylate de méthyle, qui est une solution de concentration 6-16% en poids de polyméthacrylate de méthyle dans l'acétate de butylcarbitol.
